# EUROPEAN PATENT SPECIFICATION

(11) **EP 1 208 743 B1**
(45) Date of publication and mention of the grant of the patent: **17.06.2009**
(21) Application number: 02075595.5
(22) Date of filing: 08.04.1997
(51) Int. Cl.: A01J 7/04, A01J 5/017, A01J 5/08

(54) **A Machine for milking animals, such as cows**
Gerät zum Melken von Tieren, sowie Kühen
Machine pour la traite d'animaux, tels que des vaches

(30) Priority: 17.04.1996 EP 96201026
(43) Date of publication of application: 29.05.2002
(62) Divisional of application: 97201047.4
(73) Proprietor: MAASLAND N.V., 3147 PA Maassluis (NL)
(72) Inventor: van der Lely, Cornelis, 6300 Zug (CH)
(74) Representative: Corten, Maurice Jean F.M.

(56) References cited:
- EP-A- 0 277 396
- EP-A- 0 332 235
- EP-A- 0 728 412
- DE-A- 2 622 794

## Description

The present invention relates to a machine for milking animals, such as cows, said machine comprising one or more teat cups capable of being connected to the teats of the animals.

In accordance with the invention the machine is characterized in that the two teat cups intended for the foremost teats differ in length from the two teat cups intended for the rearmost teats. This may be of great advantage, as in many cases the rearmost teats are in a lower position than the foremost ones. In particular, the latter teat cups may be produced as shorter ones than the teat cups intended for the foremost teats.

The machine as described thus far may be provided with a milking robot for automatically connecting the teat cups to the teats of an animal to be milked and, after automatically milking the animal, automatically disconnecting the teat cups from the teats. In such a fully automated milking system the milking robot preferably comprises a robot arm construction capable of serving as a carrier for the teat cups and to which the teat cups, when they are connected to the teats, are only joined by means of a flexible element, such as a cable or a wire. Due to this the animal to be milked, after the teat cups have been connected, will be able to move freely, at least will not be hindered by the robot arm construction. As soon as the milk stream from an udder quarter to which a teat cup is connected has come below a specific level, said teat cup can be disconnected independently of the other teat cups and be pulled against the robot arm construction by means of the aforementioned flexible element and a pulling member connected therewith. In that case it is advantageous when the teat cup has a conically extending bottom part so as to be able to be pulled against the robot arm construction into a recess having a corresponding shape.

During the milking proper, in a teat cup there is an underpressure ensuring that the teat cup remains connected to the relevant teat. When a teat has to be cleaned in this teat cup before the milking is started, there will usually be no underpressure in the teat cup and the teat cup will have to be connected otherwise to the relevant teat. Although it is possible to support a teat cup at least during cleaning of a teat, it is preferable to provide the teat cup at its upper end with a hollow flexible edge with the aid of which, by supplying compressed air, the teat cup can be connected to the teat during cleaning of the latter. Therefore, the invention also relates to a machine for milking animals, such as cows, said machine comprising one or more teat cups capable of being connected to the teats of the animals, while a teat cup is provided with a cleaning device by means of which a cleaning fluid can be introduced into the teat cup when the latter is connected to a teat, which machine is then characterized in that the teat cup is provided at its upper end with a hollow flexible edge with the aid of which, by supplying compressed air, the teat cup is connected to the teat during cleaning of the latter. The flexible edge may in particular be constituted by a ring line capable of being disposed around a teat and into which a first compressed air supply line debouches.

In order to make it possible to use the teat cup in two modes, i.e. cleaning and milking, the teat cup, viewed in the position in which it is connected to a teat, comprises an upper cup portion and a lower portion which is movable in said upper portion in the longitudinal direction thereof, while, during cleaning of the teat to which the teat cup is connected, the two cup portions are spaced apart from each other and, during milking, the two cup portions are fitted together in such a way that the teat is located in the lower cup portion. The aforementioned flexible edge will then constitute part of the upper cup portion. Although it is possible to move the two cup portions into and out of each other by rotating, it is preferable to produce the two cup portions such that they are capable of being shifted into and out of each other, while the lower cup portion is shifted into the upper cup portion by supplying compressed air. For that purpose there is provided a second compressed air supply line, which debouches into a space created between the two cup portions immediately after the supply of compressed air.

In order to have the milking performed as smoothly as possible, it is important to provide the lower cup portion with a flexible lining, constituting, at the upper edge of the lower cup portion, an enclosure for a teat to be introduced into said lower cup portion. It will then be possible for a line for a pulsating vacuum to debouch into the space between the flexible lining and the outer wall of the lower cup portion.

In the lower part of the teat space of the lower cup portion there will be collected fluid, i.e. a cleaning fluid, foremilk or milk. For the purpose of discharging the fluid collected, there is provided a line debouching into the lower part of the teat space of the lower cup portion, in which line there is included a three-way valve by means of which the cleaning fluid, foremilk and milk, collected consecutively in the teat space, is discharged separately.

In a first embodiment of the machine as described thus far, the upper cup portion comprises an inner wall which is provided near its top end with apertures via which the cleaning fluid can be sprayed or spouted against the teat. These apertures may be orientated obliquely upwards in the direction of the open end of the cup, while they may further be provided around as well as over a length corresponding approximately to the distance over which the upper cup portion and the lower one can be spaced apart from each other. In this manner the entire surface of the teat, then located in the upper cup portion, can be cleaned. In this first embodiment, between the inner and the outer wall of the upper teat cup portion, there may be provided a space into which a cleaning fluid supply line debouches.

In a second embodiment of the machine, in the teat space of the teat cup there is provided a channel extending from the lower portion of the teat cup substantially in the direction of the open end thereof, via which channel the cleaning fluid can be sprayed or spouted against the teat to which the teat cup is connected.

For a better understanding of the invention, reference will now be made to the accompanying drawings, in which:
Figure 1 shows schematically a milk box including a milking robot arranged therein;
Figure 2 is a partial cross-section of part of a teat cup in an appropriate position for cleaning a teat;
Figure 3 is a partial cross-section taken on the line III-III in Figure 2;
Figure 4 is a cross-section of the aforementioned teat cup in an appropriate position for milking, and
Figure 5 is a cross-section of the teat cup in a second embodiment.

In both embodiments, corresponding parts in the drawings have been indicated by the same reference numerals.

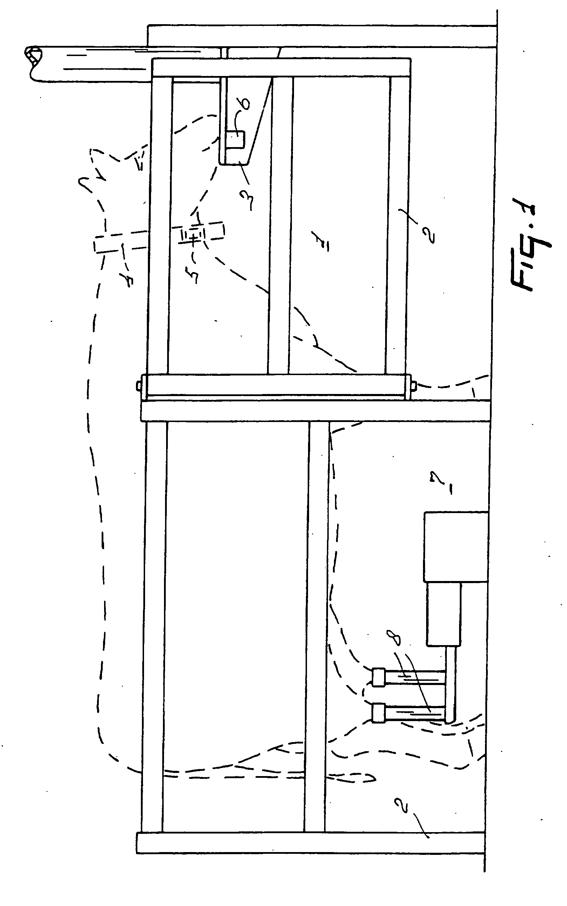

Figure 1 shows a milk box 1 in which an animal to be milked is indicated by broken lines. The milk box 1 is confined by a railing 2, in the longitudinal side(s) of which there are provided an entrance door and an exit door. At the front side of the milk box 1 a feed trough 3 is fastened to the railing 2, which feed trough constitutes part of a (non-shown) automatic feeding system. An animal entering the milk box 1 is identified there by means of an animal identification system known per se composed of a collar 4 worn by the animal, including a transponder 5 cooperating with a sensor 6 disposed near the feed trough, which sensor 6 is connected with a (non-shown) computer system. The implement is further provided with a milking robot 7 for automatically cleaning the teats of an animal to be milked, automatically connecting teat cups 8 to the teats of the animal, automatically milking the animal and automatically disconnecting the teat cups 8 from the teats. Such a milking robot has been known for a considerable time already in all kinds of embodiments. For automatically connecting the teat cups to the teats of an animal to be milked it is necessary to know the position of the teats of the animal. Although it is possible to use historical data regarding the teat position, in particular when the animal is accurately positioned in the milk box or when the position of the animal in the milk box is known, besides, or even instead, there may be used one or more detectors specifically provided for the purpose.

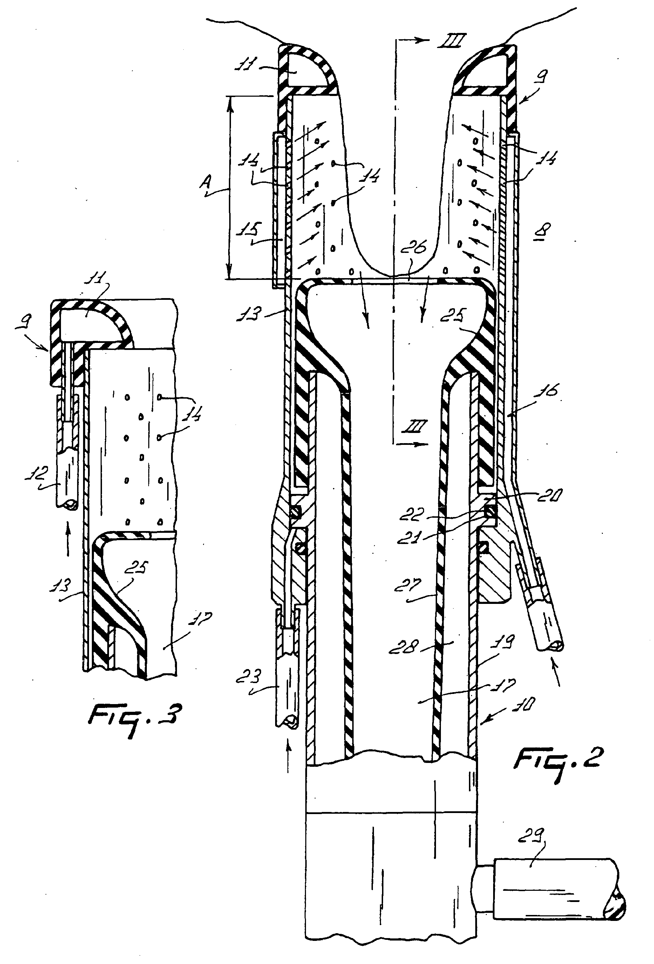

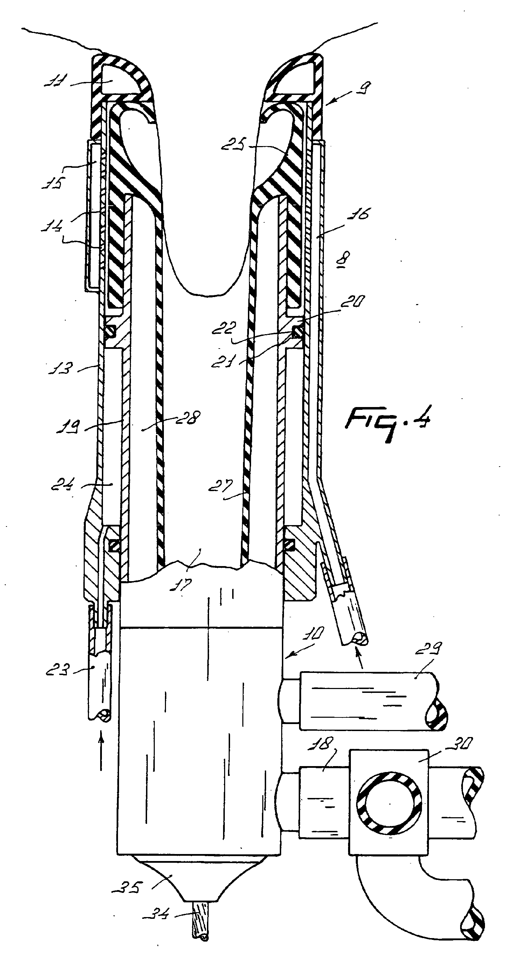

Although, prior to milking the animal, the teats have to be cleaned and, to that end, there will usually be provided separate cleaning means, in accordance with the present embodiment, the cleaning system for the teats is integrated into the teat cups themselves. For that purpose the teat cup 8 shown in Figures 2 to 4 comprises an upper cup portion 9 including cleaning means and a lower portion 10 which is movable in said upper portion in the longitudinal direction thereof. The upper cup portion 9 is provided with a hollow flexible edge 11 with the aid of which, by supplying compressed air, the teat cup is connected to a teat during cleaning of the latter. To that end the hollow space of the flexible edge 11 is connected to a first compressed air supply line 12 which, as shown in Figure 3, is disposed in the longitudinal direction at the outside of the upper cup portion 9. By pressing air via this compressed air supply line 12 into the hollow flexible edge 11, the upper portion will fit closely around the teat so as to prevent the teat cup from falling off from the teat. This way of connecting a teat cup to a teat is preferably not applied during the milking proper, as the pressure on the teat may hamper the outflow of the milk. However, regarding the cleaning of the teat there are no objections against this way of connecting the teat cup. During cleaning of the teat the lower cup portion 10 is lowered such that the teat inserted into the teat cup only occupies the upper cup portion 9. In order to be able to clean the teat, the inner wall 13 of the upper cup portion comprises apertures 14, which are preferably provided in said inner wall around the upper cup portion, in particular over a distance in longitudinal direction which approximately equals the distance A over which the two cup portions can be spaced apart from each other. At the top side of the upper cup portion 9 there is provided a space 15, into which a cleaning fluid supply line 16 debouches, which is disposed in the longitudinal direction of the teat cup. The apertures 14 in the inner wall of said space 15 of the upper cup portion 9 are orientated obliquely upwards, i.e. extend obliquely upwards in the direction of the open end of the teat cup, so that the cleaning fluid, which is supplied via the supply line 16 and is introduced into the space 15 around the teat cup, is sprayed or spouted via the apertures 14 on all sides in upward direction against the teat inserted into the teat cup. The cleaning fluid is discharged via the teat space 17 into the lower cup portion 10 and the discharge line 18 connected therewith. When after cleaning of the teat milking has to take place, the lower cup portion 10 is raised and shifted around the teat which is inserted into the teat cup. In the present embodiment, this is effected by means of compressed air. For that purpose the lower cup portion comprises a tube-like body 19 provided with a projecting edge 20, which is movable along the inside of the wall of the upper cup portion 9 so as to fit therein. In this projecting edge 20 there is provided a recess 21 for a sealing ring 22 in order to realize a desired sealing between the two cup portions. Along the outside of the teat cup and rigidly connected with the upper cup portion 9 there is provided a second compressed air supply line 23; the opening at the upper side of said compressed air supply line 23 debouches at the lower side of the projecting edge 20. As soon as there is supplied compressed air, under the influence thereof the lower cup portion 10 will be moved upwards and there will be created a compressed air space 24. The tube-like body 19 is provided with a flexible upper portion 25 which is arranged around the tube-like body 19 above the projecting edge 20 and which is provided at its top side with an opening 26 into which the teat can be inserted when the lower cup portion 10 is moved upwards in the upper cup portion 9. Said opening 26 is such that the flexible upper portion 25 will closely fit the teat inserted into the lower cup portion 10. In the present embodiment, the flexible upper portion 25 constitutes an integral whole with a lining 27 of the lower cup portion 10. Within said lining 27 the teat space 17 extends, in which teat space 17 the teat is located during milking, i.e. when the lower cup portion 10 is moved upwards within the upper cup portion 9 and the teat has been inserted therein. The space between the tube-like body 19 and the lining 27 constitutes a pulsation space 28. Although not further shown, said pulsation space 28 is connected via a pulsation line 29 with a pulsator usually applied in such milking installations. During milking the milk is collected in the teat space 17 and discharged via the discharge line 18. As this line also serves for discharging the cleaning fluid in the stage before the milking proper, there is included a valve 30 in the discharge line 18. In Figure 4 said valve 30 is designed as a four-way valve including a separate outlet for the cleaning fluid, if desired, the foremilk and, of course, the milk itself.

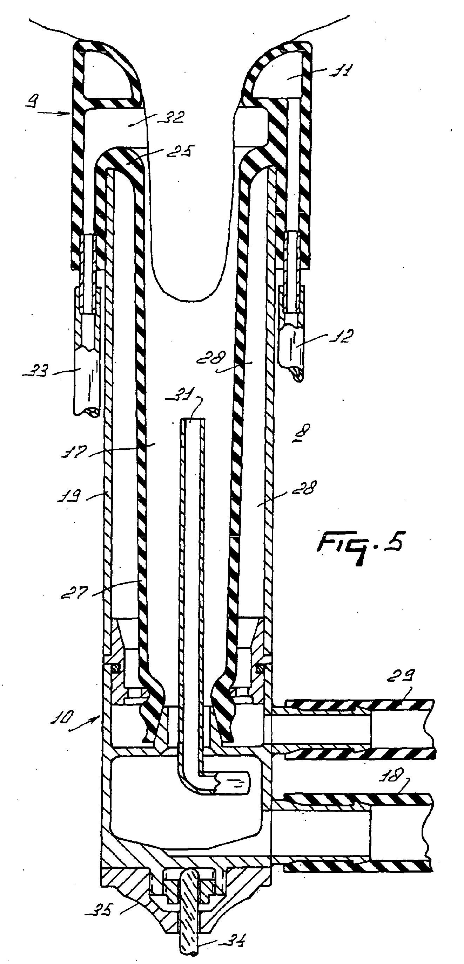

In the second embodiment of the teat cup, which embodiment is shown in Figure 5, the teat cup does not comprise two cup portions which are movable relative to each other. In this embodiment, upon connecting the teat cup, the teat is inserted into the teat space 17, via which the milk yielded is discharged and the cleaning fluid is supplied. Also in this case there is provided a flexible upper portion 25 on the tube-like body 19, constituting the wall of the teat cup, which upper portion constitutes an integral whole with both the hollow flexible edge 11 and the lining 27 or is rigidly connected thereto. Like in the first embodiment, also in this second embodiment the cup is kept connected to the teat during cleaning of the latter by supplying compressed air via the line 12 to the hollow space in the flexible edge 11. After the teat has been cleaned, this pressure is removed and the teat cup is kept connected to the teat by means of the thus created underpressure in the teat space 17. Then the teat is fittingly surrounded by that part of the flexible upper portion 25 which is immediately adjacent to the upper edge of the tube-like body 19. There is provided a channel 31 extending from the lower side of the teat cup to the open end thereof, which channel 31 is connected at the lower side of the cleaning cup to a (non-shown) cleaning fluid supply line. Said channel 31 extends at its upper side in the teat cup to such an extent, that the fluid spouted out of the channel 31 can be sprayed or spouted upwards or obliquely upwards against the teat inserted into the teat cup. When the cleaning fluid is spouted against the teat via the channel 31, the teat space 17 will be filled first, while it is noticed that in that case the discharge line connected to the teat space 17 is provided with a valve, which is closed during cleaning. The further cleaning fluid supplied via the channel 31 will subsequently be pressed upwards along the teat through the enclosure of the part of the flexible upper portion 25 adjacent to the tube-like body 19, in a space 32 between said flexible upper portion 25 adjacent to the tube-like body 19 and the lower side of the hollow flexible edge 11, and subsequently be discharged from said space 32 via a cleaning fluid discharge line 33. By also including in this case a valve, preferably a four-way valve 30, in the line 18, it will be possible, after cleaning, to discharge separately the cleaning fluid remaining behind in the teat space 17, while it will also be possible in this case to discharge, if desired, the foremilk and, of course, the milk itself via other lines connected to said valve.

As already mentioned before, the here described teat cups may be arranged in a milking robot 7, in particular on or against a robot arm construction carrying the teat cups. By means of a flexible element, such as a cable or wire 34, the teat cups are capable of being pulled against the robot arm construction. To that end the robot arm construction comprises a pulling member, e.g. a control cylinder. As soon as the milk stream from an udder quarter to which the teat cup is connected has come below a specific level, the teat cup will be disconnected by removing the vacuum therein, whereafter the pulling member is activated so that the teat cup will be pulled against the robot arm construction. In order to achieve that the teat cup is pulled each time into the same position on the robot arm, the teat cup has a conically extending bottom part 35 fitting into a recess having a corresponding shape, which is provided in the robot arm construction. The robot arm construction will in principle carry four teat cups. The two teat cups intended for the foremost teats differ in length from the two teat cups intended for the rearmost teats, in such a way that, because the rearmost teats of an animal to be milked are usually positioned lower, the teat cups for the rearmost teats are produced as shorter ones.

## Claims

1. A machine for milking animals, such as cows, said machine comprising four teat cups (8) capable of being connected to the teats of the animals, said machine being provided with a milking robot (7) for automatically connecting the teat cups (8) to the teats of an animal to be milked and, after automatically milking the animal, automatically disconnecting the teat cups (8) from the teats, in which during the milking proper, in a teat cup there is an underpressure ensuring that the teat cup remains connected to the relevant teat, **characterized in that** the two teat cups (8) intended for milking the foremost teats differ in length from the two teat cups (8) intended for milking the rearmost teats.

2. A machine as claimed in claim 1, **characterized in that** the milking robot (7) comprises a robot arm construction capable of serving as a carrier for the teat cups (8) and to which the teat cups (8), when they are connected to the teats, are only joined by means of a flexible element, such as a cable or wire (34).

3. A machine as claimed in claim 2, **characterized in that**, as soon as the milk stream from the udder quarter to which a teat cup (8) is connected has come below a specific level, said teat cup (8) will be disconnected and be pulled against the robot arm construction by means of said flexible element and a pulling member connected therewith.

4. A machine as claimed in claim 3, **characterized in that** the teat cup (8) has a conically extending bottom part (35) and can be pulled against the robot arm construction into a recess (21) having a corresponding shape.

5. A machine as claimed in any one of the preceding claims, **characterized in that** a cleaning system for the teats is integrated into the teat cups themselves.

## Patentansprüche

1. Vorrichtung zum Melken von Tieren, wie Kühen, wobei die Vorrichtung vier Zitzenbecher (8) umfasst, welche an den Zitzen der Tiere anschließbar sind, wobei die Vorrichtung mit einem Melkroboter (7) zum automatischen Anschließen der Zitzenbecher (8) an die Zitzen eines zu melkenden Tieres und nach dem automatischen Melken des Tieres zum automatischen Abnehmen der Zitzenbecher (8) von den Zitzen ausgestattet ist, wobei während des eigentlichen Melkvorgangs in einem Zitzenbecher ein Unterdruck auf gebaut ist, welcher sicherstellt, dass der Zitzenbecher mit der jeweiligen Zitze verbunden bleibt,
**dadurch gekennzeichnet, dass** sich die zwei Zitzenbecher (8), welche für das Melken der vordersten Zitzen vor gesehen sind, in ihrer Länge von den zwei Zitzenbechern (8), welche für das Melken der hinteren Zitzen vorgesehen sind, unterscheiden.

2. Vorrichtung nach Anspruch 1,
**dadurch gekennzeichnet, dass** der Melkroboter (7) einen Roboterarm umfasst, welcher als ein Träger für die Zitzenbecher (8) dient und an welchem die Zitzenbecher (8), wenn sie mit den Zitzen verbunden sind, nur mittels eines biegsamen Elements, wie einem Kabel oder Draht (34), verbunden sind.

3. Vorrichtung nach Anspruch 2,
**dadurch gekennzeichnet, dass**, sobald der Milchstrom von dem Euterviertelbereich, an welchem ein Zitzenbecher (8) angeschlossen ist, unter ein bestimmtes Niveau abgefallen ist, der Zitzenbecher (8) abgenommen und gegen den Roboterarm mittels des biegsamen Elements und eines Zug elements, welches damit verbunden ist, gezogen wird.

4. Vorrichtung nach Anspruch 3,
**dadurch gekennzeichnet, dass** der Zitzenbecher (8) einen sich konisch erstreckenden Bodenteil (35) aufweist und gegen den Roboterarm in eine Vertiefung (21), welche eine entsprechende Form besitzt, gezogen werden kann.

5. Vorrichtung nach einem der vorhergehenden Ansprüche,
**dadurch gekennzeichnet, dass** ein Reinigungssystem für die Zitzen in die Zitzenbecher integriert ist.

## Revendications

1. Machine à traire des animaux, tels que les vaches, ladite machine comprenant quatre gobelets trayeurs (8) aptes à être appliqués sur les trayons des animaux, ladite machine étant munie d'un robot de traite (7) pour appliquer automatiquement les gobelets trayeurs (8) sur les trayons d'un animal à traire et, après la traite automatique de l'animal, pour décrocher les gobelets trayeurs (8) des trayons, dans laquelle, pendant la traite proprement dite, il existe une sous-pression dans un gobelet trayeur assurant que le gobelet trayeur reste appliqué sur le trayon correspondant, **caractérisée en ce que** les deux gobelets trayeurs (8) conçus pour traire les trayons les plus en avant ont une longueur différente de celle des deux gobelets trayeurs (8) conçus pour traire les trayons les plus en arrière.

2. Machine selon la revendication 1, **caractérisée en ce que** le robot de traite (7) comprend une construction formant bras robotisé apte à servir de support pour les gobelets trayeurs (8) et à laquelle les gobelets trayeurs (8), quand ils sont appliqués sur les trayons, sont reliés au seul moyen d'un élément flexible, tel qu'un câble ou un fil (34).

3. Machine selon la revendication 2, **caractérisée en ce que**, dès que le flux de lait provenant du pis sur lequel est appliqué un gobelet trayeur (8) descend en dessous d'un niveau prédéterminé, ledit gobelet trayeur (8) va être décroché et attiré contre la construction formant bras robotisé au moyen dudit élément flexible et d'un élément de traction relié à celui-ci.

4. Machine selon la revendication 3, **caractérisée en ce que** le gobelet trayeur (8) comprend une partie inférieure (45) s'étendant en cône et peut être attiré contre la construction formant bras robotisé dans un renfoncement (21) ayant une forme correspondante.

5. Machine selon l'une quelconque des revendications précédentes, **caractérisée en ce qu'**un système de nettoyage pour les trayons est intégré aux gobelets trayeurs eux-mêmes.
